(19) Europäisches Patentamt
European Patent Office
Office européen des brevets

(11) **EP 2 507 167 B1**

(12) **EUROPÄISCHE PATENTSCHRIFT**

(45) Veröffentlichungstag und Bekanntmachung des Hinweises auf die Patenterteilung:
**15.02.2017 Patentblatt 2017/07**

(21) Anmeldenummer: **10776329.4**

(22) Anmeldetag: **28.10.2010**

(51) Int Cl.:
*C01B 17/54* $^{(2006.01)}$     *C01B 17/76* $^{(2006.01)}$
*C01B 17/50* $^{(2006.01)}$

(86) Internationale Anmeldenummer:
**PCT/EP2010/066306**

(87) Internationale Veröffentlichungsnummer:
**WO 2011/067044 (09.06.2011 Gazette 2011/23)**

(54) **VORRICHTUNG UND VERFAHREN ZUR VERBRENNUNG VON SCHWEFEL UND SCHWEFELHALTIGEN VERBINDUNGEN**

METHOD FOR MAKING SULPHURIC ACID

PROCÉDÉ DE FABRICATION D'ACIDE SULFURIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.12.2009 EP 09014862**
          **22.04.2010 DE 102010018172**
          **09.09.2010 DE 102010040482**

(43) Veröffentlichungstag der Anmeldung:
**10.10.2012 Patentblatt 2012/41**

(73) Patentinhaber: **Chemetics, Inc.**
**Vancouver, British Columbia, V5M 0AS (CA)**

(72) Erfinder:
• **FÖRTSCH, Dieter**
  **42799 Leichlingen (DE)**

• **KÜRTEN, Martin**
  **51465 Bergisch Gladbach (DE)**

(74) Vertreter: **Beyer, Andreas et al**
**Wuesthoff & Wuesthoff**
**Patentanwälte PartG mbB**
**Schweigerstrasse 2**
**81541 München (DE)**

(56) Entgegenhaltungen:
**EP-A2- 1 262 451     EP-A2- 1 295 849**
**WO-A1-2008/052649  DE-B- 1 032 722**
**US-A- 3 803 297      US-A- 3 803 298**
**US-A- 3 936 275      US-A- 5 807 530**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Gegenstand der vorliegenden Erfindung ist ein Verfahren und eine Vorrichtung zur Verbrennung von Schwefel und/oder schwefelhaltigen Verbindungen wie z.B. Schwefelwasserstoff unter Bildung von Schwefeldioxid.

Im Stand der Technik sind verschiedene Vorrichtungen und Verfahren zum Verbrennen von Schwefel oder schwefelwasserstoffhaltigen Gasen beschrieben.

Die Verbrennung von elementarem Schwefel spielt beispielsweise bei der großtechnischen Herstellung von Schwefelsäure eine bedeutende Rolle.
Die Verbrennung von Schwefelwasserstoff ist beispielsweise in Form des Claus-Verfahrens oder des WSA-Verfahrens (WSA = *wet sulfuric acid*) von industrieller Bedeutung.

Um eine vollständige Verbrennung von Schwefel zu Schwefeldioxid ($SO_2$) zu gewährleisten, erfolgt die Verbrennung Üblicherweise im stöchiometrischen Sauerstoffüberschuss, Diese überstöchiometrische Verbrennung ist beispielsweise in Ullmann's Encyclopedia of Industrial Chemistry, 5. Aufl., 1994, Vol. A25, S. 574 f. beschrieben. Die Verbrennung erfolgt dort in einem horizontal angeordneten zylindrischen Ofen, der feuerfest ausgemauert ist und ein an seiner Stirnseite zentral angeordnetes Brennersystem aufweist. Der flüssige Schwefel wird zerstäubt und mit der Verbrennungsluft vermischt. Die Brennkammern sind adiabat ausgeführt, d.h. eine Wärmeabfuhr aus der Brennkammer erfolgt nicht.

Allgemein gilt, dass bei Sauerstoffüberschuss die adiabate Flammentemperatur mit zunehmenden Konzentrationen von Schwefel und Sauerstoff in den Edukten ansteigt. Bei Verbrennungstemperaturen oberhalb von 1100 °C nimmt die Bildung von so genannten thermischen Stickoxiden ($NO_x$) stark zu. Um die Bildung von thermischen Stickoxiden zu vermeiden, wird in WO2007/090671A2 eine zweistufige Verbrennung vorgeschlagen. Der Schwefel wird dabei komplett an der Stirnseite der Brennkammer zugegeben. Die Zugabe der Verbrennungsluft wird in zwei Stufen aufgeteilt. In der ersten Stufe erfolgt eine unterstöchiometrische Verbrennung des Schwefels, d.h. unter Sauerstoffmangel. Die reduzierenden Bedingungen verhindern die Bildung von $NO_x$. In der unmittelbar auf die erste Stufe folgenden zweiten Stufe wird durch weitere Luftzugabe die verbleibende Menge an Schwefel im Sauerstoffüberschuss nachverbrannt.

In DE1948754A1 wird ebenfalls eine zweistufige Verbrennung vorgeschlagen, bei der die erste Stufe unterstöchiometrisch, die zweite Stufe überstöchiometrisch in Bezug auf Sauerstoff verläuft. Die Verbrennung erfolgt in den Stufen 1 und 2 adiabat. Zwischen den Stufen erfolgt eine Kühlung der Gasmischung mittels eines Wärmetauschers.

Üblicherweise ist die adiabate Brennkammer über eine Öffnung mit einem Abhitzekessel verbunden. Erst in dem Abhitzekessel wird das Reaktionsgas abgekühlt, vorzugsweise unter Dampfgewinnung (siehe z.B. WO2007/09067A2).

Die Auslegungskriterien herkömmlicher adiabater Brennkammern zur Verbrennung von Schwefel basieren auf der Flammenlänge und dem Durchmesser der Flamme. Die Dimensionierung der Brennkammer erfolgt so, dass ein vollständiger Ausbrand des Schwefels zu $SO_2$ erfolgt, so dass kein unreagierter Schwefel die Brennkammer verlässt und in die nachgeschaltete Rauchgasabkühlung eintreten kann (WO2007/090671A2).

Der Ausbrand wird herkömmlich durch entsprechend lange Verweilzeiten bei ausreichend hoher Temperatur in der adiabaten Brennkammer sichergestellt. Diese Forderung bestimmt die Größe der Brennkammer und das Temperaturprofil (das bei adiabaten Brennkammern nach der Flamme nahezu konstant ist). Zur Begründung der Forderung nach einem vollständigen Ausbrand wird in der Regel angeführt, dass sonst Schäden im Bereich des Kessels zu befürchten sind (siehe z.B. WO1995/32149A1 oder WO2007/090671A2).

Die Patentschrift EP1295849B1 beschäftigt sich mit der Niedertemperatur-Verbrennung von Schwefel mit einer überstöchiometrischen Menge an Luftsauerstoff. Es werden spezielle Maßnahmen getroffen, um sowohl bereits im Edukt enthaltende Mengen an $NO_x$ zu eliminieren als auch die durch Verbrennung in Luft entstehenden Mengen an thermischem $NO_x$ zu vermeiden. Die komplette Verbrennungsluft wird am Boden einer Brennkammer zugegeben und der Schwefel in mehreren, vorzugsweise zwei Stufen senkrecht zur Strömungsrichtung der Verbrennungsluft zugeführt. Die Verbrennungstemperatur wird in einem Bereich zwischen 500°C bis 700°C gehalten. Schwefel wird über mehrere peripher am Umfang der Brennkammer verteilte spezielle, pulsierende Fächerdüsen senkrecht zur Strömung der turbulenzarmen, mit gleicher Geschwindigkeit zuströmenden Verbrennungsluft zerstäubt. Zwischen den Verbrennungszonen erfolgt eine Wärmeauskopplung. Es ist ausschließlich eine Verbrennung mit Luft ggf. unter Zugabe von $SO_2$/$NO_x$-haltigen Gasen beschrieben.

In DE4002465A1 ist beschrieben, dass bereits vorhandene Mengen an $NO_x$ im Reaktionsgas durch Schwefelzugabe in einer adiabaten Brennkammer reduziert werden können.

Mit Luft, die 20,95 Vol.-% Sauerstoff enthält, lässt sich bei stöchiometrischer Verbrennung von Schwefel theoretisch ein $SO_2$-haltiges Gas mit maximal 20,5 Vol.-% $SO_2$ erhalten. Der größte Bestandteil des $SO_2$-haltigen Gases ist Stickstoff. Üblicherweise wird das entstandene $SO_2$ in einem katalytischen Verfahren weiter zu $SO_3$ oxidiert, um Schwefelsäure zu gewinnen. Ein hoher Stickstoffanteil in dem $SO_2$-haltigen Gas ist dabei unter anderem deswegen ungünstig, weil er zu großen Apparatedimensionen und hohen Gebläseleistungen führt.

Die heutigen Kontaktverfahren erlauben zudem die Einspeisung von Gasen mit einer Konzentration an Schwefeldioxid von bis zu 66 Vol.-% (WO2008/052649A1).

Im Hinblick auf die Reduzierung des Anteils an unerwünschtem Stickstoff im Produktgas der Verbrennung und im Hinblick auf eine effiziente und kompakte Anlage zur Weiterverarbeitung des hergestellten Schwefeldioxids (z.B. zu Schwefelsäure) wäre es daher wünschenswert, die Verbrennung in einem gegenüber Luft mit Sauerstoff angereicherten Verbrennungsgas durchzuführen.

So offenbart EP1262451 A2 ein Verfahren zur Herstellung von Schwefeldioxid durch Verbrennung von Schwefel mit reinem Sauerstoff ohne jegliches Inertgas, wobei der reine Sauerstoff durch rückgeführtes Verbrennungsgas verdünnt wird, das vorher gekühlt wurde, um eine Verbrennung unterhalb von 1200 °C zu gewährleisten.

Die Verbrennung von Schwefel und schwefelhaltigen Verbindungen wie beispielsweise Schwefelwasserstoff in einem sauerstoffreichen Verbrennungsgas verursacht jedoch einige technische Probleme.

Die Erhöhung der Sauerstoffkonzentration bewirkt eine Erhöhung der adiabaten Flammentemperatur. Hohe Flammen- und Flammenspitzentemperaturen können zu einer Schädigung (Abbrennen) der Düse führen und erhöhen die Bildung von $NO_x$ in der Flamme.

Weiterhin ist eine Schädigung der Brennkammerwand, die üblicherweise Eisen enthält, zu befürchten. Um beispielsweise die Bildung von Eisen(II)-Sulfid FeS, Eisen(II)-Disulfid ($FeS_2$) oder Eisen(III)-Sulfid ($Fe_2S_3$) zu verhindern, sollte die Brennkammerwandtemperatur unterhalb von 480°C liegen. Auf der anderen Seite sollte die Brennkammerwandtemperatur oberhalb des Taupunkts von Schwefelsäure liegen. Der Schwefelsäuretaupunkt ist abhängig von der $SO_3$- und der $H_2O$-Konzentration im Rauchgas, wobei die $SO_3$-Konzentration wiederum abhängig ist von den Konzentrationen von $SO_2$ und $O_2$ sowie der Temperatur und Verweilzeit, wobei auch katalytisch wirkende Stoffe von Bedeutung sein können.

Wie bereits diskutiert ist zudem bei höheren Temperaturen mit der Bildung von thermischem $NO_x$ aus molekularem Stickstoff ($N_2$) zu rechnen. Die Bildung von thermischem $NO_x$ ist u.a. von der Temperatur und der Verweilzeit abhängig. Bei hohen Temperaturen und langer Verweilzeit in der Verbrennungszone erfolgt eine verstärkte Stickoxidbildung. Da in den herkömmlich eingesetzten adiabaten Brennkammern für die Verbrennung von Schwefel aufgrund des geforderten Ausbrandes eine lange Verweilzeit erforderlich ist, sind diese Arten der Brennkammer nicht effizient. Neben diesem thermischen $NO_x$ kann bei Verbrennung von schwefelhaltigen Verbindungen aus organischen Quellen auch die Bildung von $NO_x$ aus chemisch gebundenem Stickstoff (z.B. in Ammoniak oder Aminen) signifikant sein.

Zur Reduzierung der Temperatur in der Brennkammer wird in der Offenlegung DE10351808A1 vorgeschlagen, einen Teil des entstehenden $SO_2$ zur Verdünnung des Reaktionsgemisches zurückzuführen. Die Verbrennung erfolgt adiabat, d.h. die Temperaturbegrenzung wird allein durch Verdünnung des Verbrennungsgases mit $SO_2$ erreicht. Bei dem aus diesem Vorschlag resultierenden Verfahren werden ca. 80 Gew.-% des aus der Brennkammer austretenden $SO_2$ als Kreisgas gefahren. Durch den hohen Anteil des Kreislaufgases sind hohe Leistungen der Gebläse und große Apparateabmessungen bzw. Rohrleitungsquerschnitte erforderlich, was zu einem unwirtschaftlichen Verfahren führt.

In US 3,803,297 ist ein Verfahren zur Herstellung von Schwefeltrioxid und Schwefelsäure beschrieben, bei dem Schwefel zunächst mit technischem Sauerstoff in einer Mehrzahl von aufeinander folgenden Verbrennungsstufen zu $SO_2$ verbrannt wird. In den einzelnen Verbrennungsstufen erfolgt die Verbrennung adiabat. Zwischen den Verbrennungsstufen erfolgt eine Kühlung. In der ersten Verbrennungsstufe werden 5% bis 40% der Gesamtmenge des zu oxidierenden Schwefels mit der halben bis ganzen molaren Menge an zurückgeführtem Schwefeltrioxid vermischt. Der Zusatz von Schwefeltrioxid bewirkt eine Kühlung bei der Verbrennung. Die hohen Verbrennungstemperaturen bei der Verbrennung von Schwefel bewirken eine Zersetzung von Schwefeltrioxid zu Schwefeldioxid und Sauerstoff unter Wärmeaufnahme. Die Rückführung bereits gewonnenen Schwefeltrioxids ist jedoch unter wirtschaftlichen Gesichtspunkten ineffizient. Weiterhin ist die adiabat geführte Verbrennung ungünstig, da die Wärmeentwicklung nur über die Gaszusammensetzung geregelt werden kann. Da es das Ziel ist, die Edukte in hohen Konzentrationen zu verbrennen, ist eine entsprechend hohe Zahl an Zwischenkühlungen zwischen den Verbrennungsstufen notwendig, um die Temperaturen auf einen geforderten Maximalwert von 2000° zu begrenzen.

Auch in US 3,803,298 ist ein Verfahren zur Herstellung von Schwefeltrioxid und Schwefelsäure beschrieben, bei dem Schwefel zunächst mit technischem Sauerstoff in einer Mehrzahl von aufeinander folgenden Verbrennungsstufen zu $SO_2$ verbrannt wird. Es gilt das zur US 3,803,298 erläuterte entsprechend.

US 5,807,530 offenbart ein Verfahren zur Verbrennung von Schwefel, bei dem flüssiger Schwefel in Form von fein verteilten Tröpfchen mit einem geringen stöchiometrischen Überschuss an Luft verbrannt wird. Dabei muss der nur geringe stöchiometrische Überschuss an Luft in den engen Grenzen von 100 bis 102 % der für eine stöchiometrische Umsetzung von Schwefel benötigten Menge Luft gehalten werden, um die Bildung von Stickoxiden zu verhindern.

Die Verbrennung von schwefelhaltigen Verbindungen, insbesondere von schwafelwasserstoffhaltigen Verbindungen spielt weiterhin bei der Aufarbeitung von Abgasen aus der Raffinerietechnik eine bedeutende Rolle. Fossile Brennstoffe, wie Erdgas, Kohle, Ölsand, Ölschiefer und Erdöl enthalten organische und anorganische Schwefelverbindungen.

Die Entfernung dieser Schwefelverbindungen ist nicht nur für die Weiterverarbeitung des Rohmaterials notwendig sondern dient vor allem auch der Verringerung der Luftverunreinigungen. Die gesetzlichen Anforderungen an die Restmengen von Schwefelverbindungen in Abgasen sind in den vergangenen Jahren erheblich gestiegen.

Für die Entfernung von Schwefelverbindungen aus Brennstoffen und Verbrennungsprodukten existiert eine Vielzahl von physikalischen und chemischen Umwandlungsprozessen.

Bei festen Brennstoffen werden die Schwefelverbindungen nach der Verbrennung im Kraftwerk als Schwefeldioxid durch eine Rauchgasentschwefelung z.B. mittels Kalkmilch absorbiert und in Calciumsulfit umgewandelt. Durch Oxidation mit im Abgas enthaltenem Restsauerstoff entsteht als Endprodukt Gips.

Bei flüssigen Brennstoffen (z.B. Dieselkraftstoff oder leichtes Heizöl), sind maximal zulässige Schwefelgehalte vorgeschrieben. Die Entschwefelung dieser Brennstoffe wird bereits in den Raffinerien durchgeführt. Die im Rohöl vorhandenen Schwefelverbindungen werden nach der Destillation wiedergefunden, wobei die so genannte Schwerölfraktion die höchsten Schwefelkonzentrationen aufweist. Die Entschwefelung erfolgt üblicherweise mit Hilfe von gasförmigem Wasserstoff. Die organischen Schwefelverbindungen werden dabei in Schwefelwasserstoff umgewandelt. Anschließend erfolgt die Entfernung des Schwefelwasserstoffs beispielsweise mittels einer Aminwäsche, Bei der Aminwäsche wird das als saures Gas (*sour gas / acid gas*) bezeichnete schwefelwasserstoffhaltige Prozessgas in einem Absorber an ein Amin gebunden. Es entsteht ein weitgehend von $H_2S$ befreites Gas (*sweet gas*) und eine $H_2S$-beladene Aminlösung. Im Regenerator erfolgt die thermische Trennung der sauren Bestandteile vom Amin, so dass das Amin erneut zur Wäsche eingesetzt werden kann. Das aufkonzentrierte, schwefelwasserstoffhaltige Gas weist $H_2S$-Konzentrationen bis 90 Vol.-% auf. Dieses Gas wird üblicherweise zur Gewinnung von Schwefel nach dem Claus-Verfahren eingesetzt.

In der petrochemischen Industrie fällt ferner das sogenannte Sour Water Stripper Gas (SWSG) an, das eine Zusammensetzung von etwa gleichen molaren Anteilen an Schwefelwasserstoff, Wasser und Ammoniak aufweist.

Auch bei der Verbrennung von Kohle oder Schweröl in Kraftwerken, bei der der Brennstoff zuvor unter Sauerstoffmangel vergast wird, entsteht ein schwefelwasserstoffhaltiges Synthesegas, welches vor der Verbrennung gereinigt wird.

Schwefelwasserstoff kommt außerdem in unterschiedlichen Konzentrationen im Erdölbegleitgas und im Erdgas mit einem Anteil von bis zu 30 Vol.-% und im Abgas von Kläranlagen mit einem Anteil von bis zu 5 Vol.-% vor.

Die industrielle Verwertung von Schwefelwasserstoff ist begrenzet. Daher wird er üblicherweise zunächst in elementaren Schwefel und anschließend in Schwefelsäure umgewandelt.

Liegt der Schwefelwasserstoff im Abgas in konzentrierter Form vor, d.h. mit Gehalten von mehr als 20 Vol.-%, so ist die Schwefel-Gewinnung nach dem so genannten Claus-Verfahren wirtschaftlich.

Das Claus-Verfahren umfasst die folgenden Reaktionsschritte:

$$2\ H_2S + 3\ O_2 \rightarrow 2\ SO_2 + H_2O$$

$$2\ H_2S + SO_2 \rightarrow 3\ S + 2\ H_2O$$

Technisch erfolgt die Schwefelerzeugung nach dem Claus-Verfahren in mehreren Stufen. In einer ersten Stufe wird $H_2S$ in einem Verbrennungsapparat zu $SO_2$ verbrannt. Das dabei entstehende $SO_2$ reagiert in dem Verbrennungsapparat bereits zu einem Großteil mit verbliebenem $H_2S$ zu Schwefel. Nach Abscheidung des Schwefels folgen eine oder mehrere katalytische Stufen zur weiteren Umsetzung von $H_2S$ mit $SO_2$.

Beim Claus-Verfahren ist die Einhaltung der Stöchiometrie wichtig, da sonst überschüssiges $SO_2$ oder $H_2S$ die Umwelt belasten kann.

Weiterhin erfolgt die Umsetzung von $H_2S$ mit $SO_2$ im Claus-Verfahren unvollständig. Um den Schwefelrückhaltungsgrad weiter zu steigern, sind diverse Verfahren entwickelt worden, die das Abgas hinter den katalytischen Stufen von Schwefelverbindungen reinigen. Das bekannteste ist das so genannte SCOT-Verfahren (Shell Claus Offgas Treating).

Der Großteil des aus $H_3S$-haltigen Abgasen gewonnenen Schwefels wird weiter zu Schwefelsäure verarbeitet. Daher ist es unter Umständen vorteilhaft, Schwefelwasserstoff direkt zu Schwefeldioxid zu verbrennen und dann unmittelbar weiter zu Schwefeltrioxid zu oxidieren und nicht den Umweg über Schwefel (Claus-Verfahren) zu gehen.

Das so genannte WSA-Verfahren (WSA = *wet sulfuric acid*) wandelt schwefelwasserstoffhaltige Abgase direkt in Schwefelsäure um. Hierbei wird das schwefelwasserstoffhaltige Gas zunächst verbrannt und das wasser- und schwefeldioxidhaltige Gas anschließend einer katalytischen Oxidation zugeführt. Das dabei entstehende $SO_3$ reagiert mit dem vorhandenen Wasser zu gasförmigem $H_2SO_4$. Flüssiges $H_2SO_4$ wird anschließend durch Kondensation der gasförmigen Schwefelsäure gewonnen. Die Verbrennung von $H_2S$ erfolgt mit Luft im ungekühlten, d.h. adiabaten Verbrennungsofen (Sulphur 312, Sept. /Okt. 2007, Seiten 80-85).

Zusätzlich zu schwefelwasserstoffhaltigen Gasen fallen in der petrochemischen Industrie noch eine Reihe von weiteren schwefelhaltigen Abgasen an, welche ebenfalls aufgrund der Umweltrichtlinien (z.B. Bundes-Immissionsschutzgesetz) behandelt werden müssen.

Zu nennen sind beispielsweise schwefelhaltige Abgase aus Kalzinier-Prozessen, die eine relativ hohe Kon-

zentration an $SO_2$ (bis zu 10000 ppm) aufweisen.

Darüber hinaus fallen hohe Mengen an Rauchgasen in Verbrennungsprozessen an, welche ebenfalls beträchtliche Konzentrationen an $SO_2$ aufweisen können. Diese werden bisher üblicherweise gemäß der oben erwähnten Rauchgasentschwefelung z.B. mit Kalkmilch behandelt, bei der große Mengen an Gips anfallen.

Das beim Regenerationsschritt eines Fluid Catalytic Crackers in der Erdöl verarbeitenden Industrie anfallende Abgas enthält neben nennenswerten Anteilen an $SO_2$ als schwefelhaltige Verbindung noch Anteile an oxidierbaren Bestandteilen wie Kohlenmonoxid sowie höhere Anteile an Stickoxiden, so dass auch hier eine Nachverbrennung erforderlich ist.

Ausgehend vom beschriebenen Stand der Technik stellt sich die technische Aufgabe, ein Verfahren und eine Vorrichtung zur Verbrennung von Schwefel und/oder schwefelhaltigen Verbindungen, insbesondere schwefelwasserstoffhaltigen Gasen bereitzustellen, durch die eine effiziente Herstellung von $SO_2$-haltigen Gasen mit einer hohen $SO_2$-Konzentration ermöglicht wird. Die Verbrennung sollte vorzugsweise mit einem Verbrennungsgas erfolgen, das mindestens einen so hohen Sauerstoffanteil wie Luft aufweist, vorzugsweise jedoch einen höheren Anteil an Sauerstoff aufweist. Das Verfahren und die Vorrichtung sollen insbesondere dazu geeignet sein, Schwefeldioxid als Quelle für die weitere Produktion von Schwefelsäure oder hochkonzentrierten $SO_3$-haltigen Gasen bereitzustellen. Daneben sollen die Vorrichtung und das Verfahren dazu geeignet sein, schwefelwasserstoffhaltige Gase, wie sie beispielsweise in der Raffinerietechnik anfallen, in hohen Konzentrationen zu $SO_2$ oxidieren.

Gelöst wird diese Aufgabe durch die Gegenstände der unabhängigen Ansprüche 1 und 9. Bevorzugte Ausführungsformen finden sich in den abhängigen Ansprüchen.

Ein erster Gegenstand der vorliegenden Erfindung ist daher eine Vorrichtung, im Folgenden Verbrennungsapparat genannt, zur kontinuierlichen Verbrennung von Schwefel und/oder einer schwefelhaltigen Verbindung unter Bildung von Schwefeldioxid.

Ein weiterer Gegenstand der vorliegenden Erfindung ist ein Verfahren zur kontinuierlichen Verbrennung von Schwefel und/oder einer schwefelhaltigen Verbindung unter Bildung von Schwefeldioxid. Das erfindungsgemäße Verfahren wird in dem erfindungsgemäßen Verbrennungsapparat ausgeführt.

Ein kontinuierliches Verfahren im Sinne dieser Erfindung ist ein Verfahren, bei dem die Zugabe der Edukte in einen Reaktor und der Austrag der Produkte aus dem Reaktor gleichzeitig aber räumlich getrennt stattfinden, während bei einem diskontinuierlichen Verfahren die Reaktionsfolge Zugabe der Edukte, chemische Umsetzung und Austrag der Produkte zeitlich nacheinander ablaufen. Die kontinuierliche Verfahrensweise ist von wirtschaftlichem Vorteil, da Stillstandszeiten des Reaktores infolge von Befüllungs- und Entleerungsprozessen und lange Reaktionszeiten z.B. infolge sicherheitstechnischer Vorgaben oder infolge von Aufheiz- und Abkühlungsprozessen, wie sie bei Batch-Verfahren auftreten, vermieden werden.

Elementarer Schwefel kann in Abhängigkeit der Umgebungsbedingungen wie Druck und Temperatur in verschiedenen Aggregatzuständen (fest, flüssig, gasförmig) und/oder Modifikationen vorliegen (bspw. orthorhombischer oder monokliner Schwefel). Wenn hier von Schwefel oder elementarem Schwefel die Rede ist, wird nicht zwischen derartigen Modifikationen unterschieden; vielmehr fallen alle denkbaren Aggregatzustände, Modifikationen und Gemische hiervon unter die hier verwendeten Begriffe. Analoges gilt für alle anderen hier aufgeführten Substanzen.

Unter einer schwefelhaltigen Verbindung wird eine Substanz oder ein Substanzgemisch verstanden, die/das mit Sauerstoff unter Bildung von Schwefeldioxid umgesetzt werden kann. Beispiele für schwefelhaltige Verbindungen sind Schwefelwasserstoff ($H_2S$), Kohlenstoffdisulfid ($CS_2$) und Kohlenoxidsulfid (COS).

Als verallgemeinernder Ausdruck, der sowohl den Begriff Schwefel als auch schwefelhaltige Verbindung umfasst, wird hier der Begriff Schwefelverbindung verwendet.

Die Verbrennung von elementarem Schwefel hat den Vorteil, dass neben dem gewünschten Schwefeldioxid keine weiteren Produkte auftreten. Daher wird als Edukt in einer bevorzugten Ausführungsform eine Substanz mit einem hohen Anteil von mindestens 90 Gew.-%, besonders bevorzugt von mindestens 95 Gel.-%, ganz besonders bevorzugt von mindestens 98 Gew.-% an elementaren Schwefel eingesetzt. Vergleiche hierzu Beispiel 1 (Verbrennung von Schwefel mit Luft) und Beispiel 2 (Verbrennung von Schwefel mit Sauerstoff).

In einer weiteren bevorzugten Ausführungsform wird als Edukt eine Substanz mit einem Anteil von mindestens 30 Mol-%, bevorzugt mindestens 60 Mol-%, besonders bevorzugt mindestens 80 Mol-% an Schwefelwasserstoff eingesetzt. Es ist beispielsweise denkbar, dass das Edukt ein Abgas ist, wie es nach der Aminwäsche in einer Raffinerie anfällt (siehe z.B A. J. Kidnay, William R. Parrish: Fundamentals of Natural Gas Processing, CRC Press, 2006). Solche Abgase weisen Üblicherweise einen Anteil von 80-90 Mol-% $H_2S$ auf und werden hier als Amine Acid Gas (AAG) bezeichnet. Weitere Bestandteile sind üblicherweise $CO_2$, $H_2O$, $N_2$, Kohlenwasserstoffe und/oder Amine, Ein weiterer möglicher Ausgangsstoff, der zumindest anteilig im Edukt vorhanden sein kann, ist das aus einem Sour-Water-Stripper resultierende Gas, das in etwa die molare Zusammensetzung 1/3 $H_2S$, 1/3 $H_2O$ und 1/3 $NH_3$ aufweist. Dieses wird auch als Sour Water Stripper Off-Gas bezeichnet (siehe beispielsweise Arthur Kohl, Richard Nielsen: Gas Purification, Fifth Edition, Gulf Publishing Company, 1997). Vergleiche hierzu Beispiel 3 (Verbrennung von schwefelhaltigen Gasen mit Luft) und Beispiel 4 (Verbrennung von schwefelhaltigen Gasen mit Sauerstoff).

In einer bevorzugten Ausführungsform werden verschiedene Schwefelverbindungen nebeneinander verbrannt.

Die erfindungsgemäße Verbrennung von Schwefelverbindungen erfolgt mit einem Verbrennungsgas, z.B. mit Luft. In einer bevorzugten Ausführungsform weist das Verbrennungsgas einen höheren Anteil an Sauerstoff als Luft auf. Der Anteil an Sauerstoff beträgt mindestens 20%, bevorzugt mindestens 40%, besonders bevorzugt mindestens 70%, ganz besonders bevorzugt mindestens 90%, am meisten bevorzugt mindestens 95%. Übliche weitere Bestandteile sind $CO_2$, Edelgase, Stickstoff und/oder Wasser.

Das Produkt, das bei der Verbrennung von Schwefelverbindungen in dem Verbrennungsgas entsteht und das im Wesentlichen $SO_2$ und nicht umgesetzte Mengen an Sauerstoff enthält, wird hier als Reaktionsgas bezeichnet. Weitere Bestandteile des Reaktionsgases können z.B. Stickstoff, Kohlendioxid, Schwefeltrioxid und Wasser sein.

Die Verbrennung erfolgt in einem Verbrennungsapparat. Der erfindungsgemäße Verbrennungsapparat weist mindestens einen Einlass für das Verbrennungsgas und mindestens einen Auslass für das gewonnene Reaktionsgas auf. Zwischen dem Einlass und dem Auslass befinden sich mindestens zwei aufeinander folgende Verbrennungszonen. Das Verbrennungsgas wird durch den Einlass in den Verbrennungsapparat gefördert und durchläuft nacheinander die Verbrennungszonen. In den Verbrennungszonen werden eine oder mehrere Schwefelverbindungen in das Verbrennungsgas eingedüst und verbrannt.

Der erfindungsgemäße Verbrennungsapparat verfügt über Mittel zur Kehlung, so dass die bei der Verbrennung entstehende Wärme abgeführt werden kann. Im Gegensatz zu den meisten, im Stand der Technik für die Verbrennung von Schwefelverbindungen beschriebenen Verbrennungsapparaten ist der erfindungsgemäße Verbrennungsapparat nicht-adiabat ausgeführt. Damit unterliegt der erfindungsgemäße Verbrennungsapparat nicht der Beschränkung, dass die bei der Verbrennung entstehende Wärme nur über die Gaszusammensetzung geregelt werden kann. Stattdessen es ist möglich, die Wärme dort abzufahren, wo sie anfällt Vorzugsweise erfolgt die Kühlung auf zwei verschiedene Arten: eine Wandkühlung und eine so genannte Zwischenkühlung. Bei der Wandkühlung wird die Wand des Verbrennungsapparates gekühlt. Die Wärmeabfuhr aus einer Verbrennungszone erfolgt dabei hauptsächlich durch Strahlung. Zusätzlich wird die Verbrennung auf verschiedene Verbrennungszonen innerhalb des Verbrennungsapparates aufgeteilt. Jeder Verbrennungszone sind ein oder mehrere Wärmeübertrager zur Anführung von Reaktionswärme nachgeschaltet (Zwischenkühlung). Hier erfolgt die Wärmeabfuhr hauptsächlich über Konvektion. Alle Verbrennungszonen sind damit nicht-adiabat ausgeführt.

Der Begriff Verbrennungszone soll nicht so verstanden werden, dass die Verbrennung einer Schwefelverbindung ausschließlich in einer solchen Zone erfolgt. Vielmehr ist die Verbrennungszone dadurch definiert, dass dort die Zugabe mindestens einer Schwefelverbindung in das Verbrennungsgas und die Zündung der Schwefelverbindung erfolgt. Um die Verbrennungswärme in den Griff zu bekommen und die Temperatur im Verbrennungsapparat auf einen Maximalwert von 2000°C zu begrenzen, erfolgt die Zugabe einer oder mehrerer Schwefelverbindungen erfindungsgemäß an verschiedenen Stellen innerhalb des Verbrennungsapparats, zwischen denen das Reaktionsgas gekühlt wird; zusätzlich wird die Wand des Verbrennungsapparats gekühlt. Die Verbrennung kann daher durchaus über das ganze Volumen des Verbrennungsapparates stattfinden, also auch zwischen zwei Verbrennungszonen.

Der erfindungsgemäße Verbrennungsapparat ist vorzugsweise ein wandgekühlter Wasserrohrkessel (Rohr-Steg-Rohr-Konstruktion). Wasserrohrkessel sind dem Fachmann der Energietechnik und der chemischen Verfahrenstechnik aus dem Stand der Technik bekannt (siehe z.B. Dubbel interaktiv, Taschenbuch für den Maschinenbau, L.6.1.1.). Die intensive Kühlung der Wandungen sorgt dafür, dass die Oberflächentemperatur der metallischen Wand unterhalb der durch Eisensulfidbildung gekennzeichneten Temperatur von etwa 480°C bleiben, auch wenn in den Verbrennungszonen Temperaturen von bis zu 2000°C herrschen. Die Wandtemperaturen liegen vorzugsweise im Bereich von 200°C bis 400°C, bevorzugt im Bereich von 240 bis 350°C. Zur Verminderung der Wärmeabfuhr über die Wand kann die Rohr-Steg-Rohr-Konstruktion auch abgekleidet werden.

Den einzelnen Verbrennungszonen sind wie beschrieben Mittel zur Kühlung des Reaktionsgases nachgeschaltet. Zur Kühlung werden beispielsweise Wärmetauscher eingesetzt. Die den einzelnen Verbrennungszonen nachgeschalteten Wärmetauscher setzen vorzugsweise flüssiges Wasser, ein zweiphasiges Wasser-Dampfgemisch und/oder Wasserdampf zur Kühlung ein. Die Reaktionswärme kann beispielsweise zur Erzeugung von Hochdruck-Dampf bei z.B. 30 bar oder 80 bar verwendet werden.

Vorzugsweise wird die gesamte oder zumindest ein Großteil des Verbrennungsgases durch einen oder mehrere Einlässe an einem Ende des Verbrennungsapparates in diesen gefördert. Das bedeutet, dass die Menge an Sauerstoff, die zur vollständigen Verbrennung der Schwefelverbindungen in den nacheinander folgenden Verbrennungszonen benötigt wird, bereits vollständig oder nahezu vollständig der ersten Verbrennungszone zugeführt wird. In allen Verbrennungszonen verläuft die Verbrennung im Sauerstoffüberschuss (d.h. überstöchiometrisch in Bezug auf Sauerstoff). Die Zugabe des Verbrennungsgases kann unverdrallt oder verdrallt erfolgen.

Ein geringerer Teil des Verbrennungsgases (der Rest) wird zur Eindüsung der Schwefelverbindung in die Verbrennungszonen und/oder zur Kühlung der Düsen verwendet werden. Zur Eindüsung der Schwefelverbindung und/oder zur Kühlung der Düsen kann auch Luft oder vorzugsweise ein Gas verwendet werden, das über einen geringeren Anteil an Sauerstoff verfügt als das Verbrennungsgas. Als so genanntes Eindüsungs- und/oder Düsenkühlungsgas wird vorzugsweise zumindest anteilig rückgeführtes Reaktionsgas enthaltend $SO_2$ oder (falls vorhanden) ein anderes $SO_2$-haltiges Gas mit geringem Sauerstoffgehalt verwendet (Details siehe unten).

In einer bevorzugten Ausführungsform werden dem Verbrennungsgas nicht umgesetzte Mengen an Schwefeldioxid und/oder Sauerstoff zugegeben, d.h. ein Teil des Reaktionsgases wird im Kreis gefahren. Vorteile ergeben sich auf der einen Seite durch die Verdünnung des Verbrennungsgases (bei Rückführung eines Gases mit einem geringeren Gehalt an Sauerstoff als im Verbrennungsgas) und die damit einhergehende geringere lokale Temperatur bei der Verbrennung (z.B. Kühlungseffekt an Düsen) und auf der anderen Seite durch die bessere Ausnutzung der Edukte.

Bei jeglicher Rückführung ist sowohl die Rückführung eines Teils des Reaktionsgases direkt nach der Verbrennung als auch - im Fall der anschließenden Weiteroxidation des Reaktionsgases zu $SO_3$ - die Rückführung von nicht umgesetzten Mengen $SO_2$ und/oder $O_2$ nach der Absorption und/oder Kondensation von $SO_3$ denkbar. Rückgeführtes Gas wird hier allgemein als Kreisgas bezeichnet.

In Strömungsrichtung ist die Brennkammer wie oben ausgeführt in mindestens zwei Verbrennungszonen aufgeteilt, Die Anzahl der Verbrennungszonen liegt vorzugsweise im Bereich von 2 bis 8, besonders bevorzugt im Bereich von 2 bis 5, In den Verbrennungszonen befinden sich Eindüsungsstellen für die Zuführung der Schwefelverbindung. Der Verbrennungsapparat ist so ausgelegt, dass die Schwefelverbindung nach Eintritt in die Verbrennungszonen in diesen zündet.

Die Zündstabilität kann durch verschiedene Maßnahmen sichergestellt werden. Es ist beispielsweise denkbar, das Verbrennungsgas auf eine Temperatur oberhalb der Zündtemperatur der Schwefelverbindung vorzuwärmen. Es ist denkbar, das Verbrennungsgas mit heißem Kreisgas zu mischen, um eine Temperatur oberhalb der Zündtemperatur zu erreichen. Ebenso ist es denkbar, dass das Verbrennungsgas eine Temperatur unterhalb der Zündtemperatur der Schwefelverbindung aufweist, und die Flamme durch eine Rezirkulationszone stabilisiert wird. In der Rezirkulationszone erfolgt eine strömungstechnisch erzwungene Rückströmung von heißem Reaktionsgas zurück zur Flammenwurzel. Diese erzwungene Rückströmung kann durch externe Rezirkulationszonen im Falle einer unverdrallten Flamme oder durch interne Rezirkulationszonen im Falle einer verdrallten Flamme realisiert werden.

Üblicherweise wird die Schwefelverbindung durch geeignete Düsen in die Verbrennungszonen eingedüst. Für Schwefel oder andere flüssige schwefelhaltige Ströme ist der Einsatz einer handelsüblichen Düse (innen mischend oder außen mischend) denkbar. Schwefel wird üblicherweise in flüssiger Form in die Brennkammer eingegeben. Als Zerstäubungsmedium wird vorzugsweise ein Gas verwendet, das über einen moderaten Sauerstoffgehalt verfügt. Dies kann beispielsweise Luft oder Kreisgas oder eine Mischung von Verbrennungsgas und Kreisgas sein. Hierdurch wird die lokale Flammentemperatur in der Nähe der Düse verringert und eine Schädigung der Düsenspitze vermieden.

Zur Zuführung gasförmiger Schwefelverbindungen, wie beispielsweise schwefelwasserstoffhaltige Gase mit einem Anteil an Schwefelwasserstoff von mindestens 30 Mol.-%, eignet sich beispielsweise ein Einleitrohr, bei dem die axiale Eintrittsgeschwindigkeit in die Brennkammer vorzugsweise > 10 m/s, besonders bevorzugte > 20 m/s beträgt. Auch derartige Einleitrohre sollen hier als Düsen bezeichnet werden.

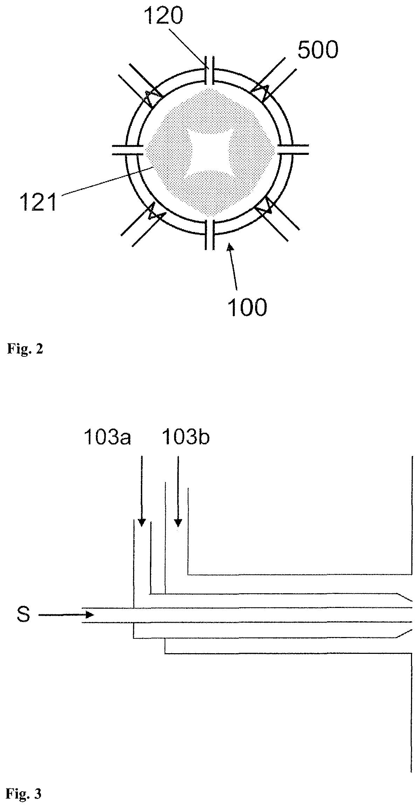

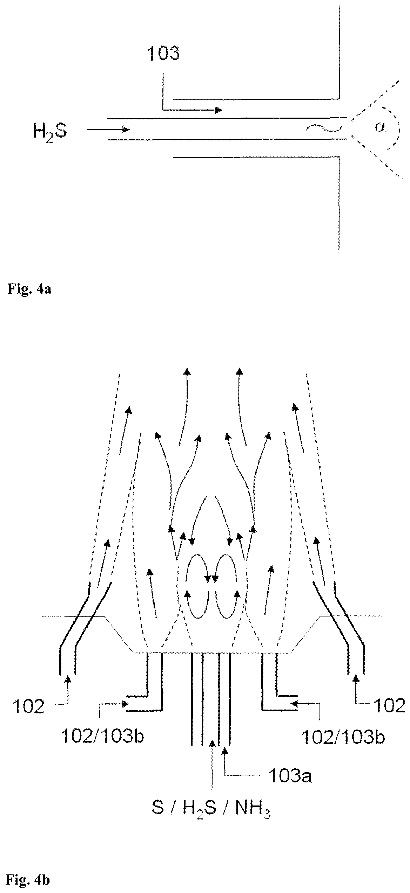

Erfindungsgemäß wird die Düse zur Zugabe einer Schwefelverbindung von außen mit einem Gas gekühlt, das einen geringeren Sauerstoffgehalt als das Verbrennungsgas aufweist, vorzugsweise mit Kreisgas (siehe Fig. 3 und Fig. 4); auch der Einsatz von Luft oder $SO_2$-haltigen Gasströmen mit geringem Sauerstoffgehalt (z.B. Abgas von Kalzinieranlagen oder Regenerator des Fluid Catalytic Crackers) ist denkbar. Dies ermöglicht die Verbrennung mit einem Verbrennungsgas mit einer hohen Sauerstoffkonzentration ohne Zerstörung der Düsen aufgrund zu hoher Temperaturen. Die lokale Flammentemperatur in der Nähe der Düse wird so weit reduziert, dass keine Schädigung der Düsenspitze erfolgt, d.h. die intensive Wärmefreisetzung wird von der unmittelbaren Eindüsungsstelle separiert.

Zur besseren Vermischung und zur Erzeugung einer kürzeren Flammenlänge wird bei gasförmigen Schwefelverbindungen der innere Strom in der Düse vorzugsweise durch eine geeignete Vorrichtung verdrallt (siehe beispielsweise EP1526129A1).

Überraschend wurde gefunden, dass ein vollständiger Ausbrand der Schwefelverbindung, wie er im Stand der Technik gefordert wird, nicht nötig ist. Versuche haben gezeigt, dass im Verbrennungsapparat verbleibende Schwefelreste keine negativen Einflüsse ausüben. Damit erfolgt die Dimensionierung des erfindungsgemäßen Verbrennungsapparates, insbesondere der Verbrennungszonen, lediglich so, dass eine Zündung und Flammenstabilität erreicht wird, und nicht, um einen vollständigen Ausbrand in der Verbrennungszone sicherzustellen. Dies führt zu einer Reduzierung der Verweilzeit in den besonders heißen Flammanzonen und damit zu einer verminderten Bildung von thermischem $NO_x$. Darüber hinaus kann der Verbrennungsapparat kompakter gestaltet werden.

Werden beispielsweise Schwefel oder $H_2S$ und $O_2$ in reiner Form miteinander umgesetzt, beträgt die adiabate Flammentemperatur etwa 3000°C. Erfindungsgemäß wird die Flammentemperatur auf einen Wert von maximal 2000°C eingestellt.

Durch die Menge der pro Zeiteinheit in den Hauptgasstrom eingegebenen Schwefelverbindung und die Ausgestaltung der Kühlmittel (Wandkühlung und/oder Zwischenkühlung) lässt sich die Wärmeentwicklung in jeder Verbrennungszone steuern. Dabei werden die Dosierung der Schwefelverbindung in jede Verbrennungszone und die Wärmeabfuhr in und zwischen den Verbrennungszonen so eingestellt, dass die Maximaltemperatur in jeder Verbrennungszone 2000°C nicht übersteigt.

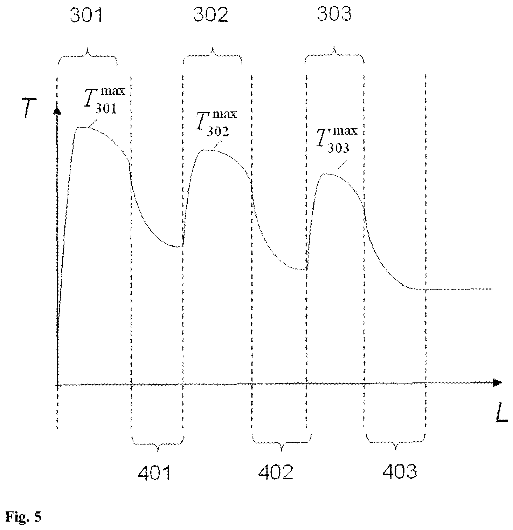

Zudem ist das erfindungsgemäße Verfahren dadurch gekennzeichnet, dass die Spitzentemperaturen in Strömungsrichtung von Verbrennungszone zu Verbrennungszone geringer werden, d.h. es stellt sich in Strömungsrichtung ein Gradient bzgl. der Maximaltemperatur ein (siehe Fig. 5). So wird beispielsweise in einer ersten Verbrennungszone, die der Hauptgasstrom als erstes passiert, vorzugsweise der höchste Massenstrom bzgl, der Schwefelverbindung eingestellt, der zu einer höchsten Maximaltemperatur in der Brennkammer führt. Diese höchste Maximaltemperatur beträgt 2000°C oder weniger. Die maximale Temperatur in der ersten Verbrennungszone liegt bevorzugt im Bereich von 1000°C, bis 2000°C, besonders bevorzugt im Bereich von 1600°C bis 1900°C. In den in Strömungsrichtung des Hauptgasstroms nachfolgenden Verbrennungszonen wird die Maximaltemperatur sukzessive reduziert.

Da die Verbrennung in allen Verbrennungszonen im Sauerstoffüberschuss abläuft, sollte der Anteil von Ausgangsstoffen im Edukt, die gebundenen Stickstoff enthalten (z.B. $NH_3$, organische N-Verbindungen), möglichst niedrig gehalten werden, um die Bildung von $NO_x$ aus gebundenen Stickstoff zu vermeiden.

Die Bildung von $NO_x$ aus gebundenem Stickstoff kann weitgehend durch lokal in einer Verbrennungszone herrschende, reduzierende Bedingungen unterdrückt werden. In einer bevorzugten Ausführungsform der Erfindung, in der anteilig ein schwefelhaltiger Ausgangsstoff mit gebundenem Stickstoff verbrannt werden soll, erfolgt die Dosierung dieses stickstoffhaltigen Ausgangsstoffs in die erste Verbrennungszone so, dass in der Flamme reduzierende Bedingungen herrschen. Das bedeutet, dass in der Flamme weniger Sauerstoff vorhanden ist als für die vollständige Verbrennung des schwefel- und stickstoffhaltigen Ausgangsstoffes benötigt wird (unterstöchiometrische Bedingungen in Bezug auf Sauerstoff). Dabei herrschen in der Verbrennungszone im Mittel, und insbesondere am Ende der Verbrennungszone (in Strömungsrichtung gesehen) überstöchiometrische Bedingungen in Bezug auf Sauerstoff und die reduzierenden Bedingungen sind lokal auf die Flamme beschränkt. Durch diese reduzierenden Bedingungen in der Flamme wird die Bildung von Stickoxiden unterdrückt. Auf die erste Verbrennungszone folgen eine oder mehrere weitere Verbrennungszonen, in denen Schwefelverbindungen zugegeben und verbrannt werden, die keinen oder einen vernachlässigbaren Anteil an gebundenem Stickstoff aufweisen und wo keine lokalen, reduzierenden Bedingungen in der Flamme erforderlich sind.

Die reduzierenden Bedingungen in der Flamme können beispielsweise durch Einsatz so genannter Low-$NO_x$-Brenner erzeugt werden, die dem Fachmann der Verbrennungs- und Energietechnik hinlänglich bekannt sind (siehe z.B. Prabir Basu et al., Boilers and Burner: Design and Theory, Mechanical Engineers Series, Springer-Verlag, 2000, Kapitel 9-9).

Aufgrund der hohen Verbrennungstemperaturen von bis zu 2000°C kann bei Anwesenheit von molekularem Stickstoff ($N_2$, z.B. anteilig im Verbrennungsgas) auch der Anteil aus thermisch gebildetem $NO_x$ nennenswert sein. Daher kann es erforderlich sein, dem Reaktionsgas in der letzten Verbrennungszone eine Schwefelverbindung zuzugeben, um vorhandenes $NO_x$ zu reduzieren. Als Schwefelverbindung kommt beispielsweise Schwefel oder $H_2S$ in Frage; vorzugsweise wird Schwefel verwendet.

Die selektive nicht-katalytische Reduktion von $NO_x$ durch Schwefel wurde in adiabaten Brennkammern bereits nachgewiesen und in einer nicht-adiabaten Brennkammer in dem sehr engen Temperaturfenster von 500 °C bis 700 °C eingesetzt (siehe z.B. EP1295849A2). Überraschend wurde festgestellt, dass die selektiv-reduzierende Wirkung des Schwefels über einen weiten Temperaturbereich effektiv ist, so dass sie für das erfindungsgemäße Verbrennungsverfahren in einem nicht-adiabaten Verbrennungsapparat eingesetzt werden kann. Dies geschieht vorzugsweise durch Zugabe von Schwefel in der in Strömungsrichtung gesehen letzten Verbrennungszone, in der Verbrennungstemperaturen im Bereich 400 °C bis 1200 °C, bevorzugt im Bereich 600 °C bis 1000 °C, besonders bevorzugt oberhalb von 700°C und unterhalb von 1000°C vorherrschen.

Üblicherweise verlässt das Reaktionsgas die Brennkammer mit einer Temperatur von 300°C bis etwa 420°C. Das Reaktionsgas, besteht hier im Wesentlichen aus $SO_2$, $O_2$ und $N_2$ und kann z.B. auch Anteile an Wasser, $SO_3$ und $CO_2$ enthalten.

Das Verhältnis von Sauerstoff zu Schwefeldioxid im Reaktionsgas, das den Verbrennungsapparat verlässt, liegt vorzugsweise in einem Volumenverhältnis von 0,2 bis 1,5, bevorzugt 0,5 bis 0,9.

Das erfindungsgemäße Verfahren und die erfindungsgemäße Vorrichtung eignen sich zur Verbrennung unterschiedlicher Schwefelverbindungen, die auch nebeneinander verbrannt werden können.

In einer bevorzugten Ausführungsform werden eine Schwefelverbindung mit gebundenem Stickstoff (vorzugsweise Sour Water Stripper Gas, SWSG), ein schwefelwasserstoffhaltiges Gas (vorzugsweise Amin Acid Gas, AAG) und elementarer Schwefel nebeneinander verbrannt. Der stickstoffhaltige Ausgangsstoff und das schwefelwasserstoffhaltige Gas oder ein Teil davon werden in die erste Verbrennungszone dosiert. Zur Verbrennung des stickstoffhaltigen Ausgangsstoffs wird ein Low-$NO_x$-Brenner eingesetzt, um die Bildung von $NO_x$ aus dem gebundenen Stickstoff zu unterdrücken. In der Flamme des Low-NOx-Brenners herrschen reduzierende Bedingungen, während in der übrigen Verbrennungszone ein Sauerstoffüberschuss vorliegt. Der ersten Verbrennungszone können weitere Verbrennungszonen folgen, in denen schwefelwasserstoffhaltiges Gas verbrannt wird. In der letzten Verbrennungszone erfolgt eine Zugabe von elementarem Schwefel, um bei der Verbrennung entstandenes $NO_x$ (aus $N_2$ und/oder aus gebundenem Stickstoff) zu reduzieren. Durch diese gestufte Verbrennung erhält man ein Reaktionsgas mit einem hohen Anteil an $SO_2$ und geringen Anteilen an $NO_x$. Werden beispielsweise SWSG als stickstoffhaltiger Ausgangsstoff und AAG als schwefelwasserstoffhaltiges Gas verwendet, so sollte der durch SWSG in den Verbrennungsapparat eingebrachte Energieeintrag höchstens 30% des gesamten in den Verbrennungsapparat durch Schwefelverbindungen eingebrachten Energieeintrags ausmachen.

In einer weiteren bevorzugten Ausführungsform werden neben einer oder mehreren Schwefelverbindungen dem Verbrennungsapparat schwefeldioxidhaltige Ströme zugeführt, die thermisch behandelt werden müssen, um die darin enthaltenden störenden Komponenten (z.B. Kohlenmonoxid oder organische Komponenten) zu oxidieren. Diese Ströme können beispielsweise Abgase des Regenerators eines Fluid Catalytic Crackern in der Erdöl verarbeitenden Industrie, aus Kalzinizerprozessen oder aus Schwefelsäure-Spaltanlagen sein. Die schwefeldioxidhaltigen Gase weisen üblicherweise einen vergleichsweise geringen Sauserstoffgehalt auf und führen daher zu einer Verdünnung des Verbrennungsgases, was zur Temperaturführung im Verbrennungsapparat vorteilhaft sein kann. Die Abgase werden so einer sinnvollen Verwertung zugeführt.

Die Erfindung wird nachstehend anhand von weiteren Beispielen näher erläutert ohne sie jedoch hierauf zu beschränken.

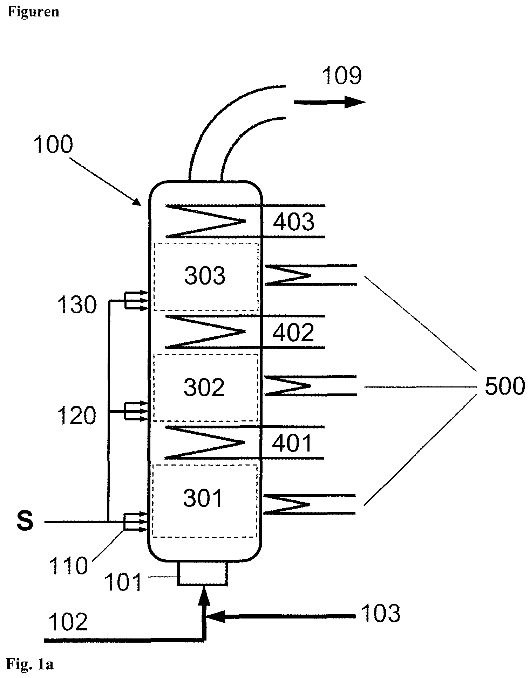

**Figur 1a** zeigt schematisch eine bevorzugte Ausführungsform des erfindungsgemäßen Verbrennungsapparats 100. Über einen unteren Einlass (101) wird das $O_2$-haltige Verbrennungsgas (102) in den Verbrennungsapparat gefördert. Diesem Hauptgasstrom können nicht umgesetzte Bestandteile aus dem erfindungsgemäßen Verfahren oder aus dem erfindungsgemäßen Verfahren nachgeschalteten Prozessen beigegeben werden (Kreisgas 103). Die Zuführung der Schwefelverbindung (S) erfolgt entlang der Strömungsrichtung in drei aufeinanderfolgenden Verbrennungszonen (301, 302, 303, dargestellt durch gestrichelte Linien). Die Zuführung der Schwefelverbindung (S) erfolgt dabei jeweils seitlich (110, 120, 130). Wie oben beschrieben kann zur Eindüsung flüssiger Schwefelverbindungen und zur Düsenkühlung ebenfalls z.B. Kreisgas verwendet werden (in der Figur nicht explizit dargestellt). Die Verbrennungszonen sind nicht-adiabat ausgeführt, was im vorliegenden Fall u.a. durch eine Wandkühlung (500) realisiert wird. Zwischen den Verbrennungszonen sind ferner Wärmetauscher zur Kühlung angeordnet (401, 402). Im Anschluss an die letzte Verbrennungszone (303) erfolgt eine weitere Kühlung (403), bevor das Reaktionsgas (109) den erfindungsgemäßen Verbrennungsapparat verlässt.

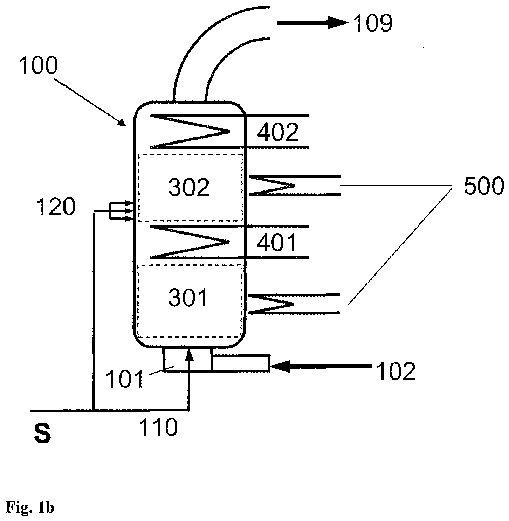

**Figur 1b** zeigt schematisch eine weitere bevorzugte Ausführungsform des erfindungsgemäßen Verbrennungsapparats 100. Über einen unteren Einlass (101) wird das $O_2$-haltige Verbrennungsgas in den Verbrennungsapparat gefördert. Die Zuführung der Schwefelverbindung (S) erfolgt entlang der Strömungsrichtung in zwei aufeinanderfolgenden Verbrennungszonen (301, 302, dargestellt durch gestrichelte Linien). Die Zuführung der Schwefelverbindung (S, 110) erfolgt dabei in der ersten Verbrennungszone (301) zentral in der Zuführung (101) des Verbrennungsgases und in der zweiten Verbrennungszonen seitlich (S, 120). Wie oben beschrieben kann zur Eindüsung flüssiger Schwefelverbindungen und zur Düsenkühlung z.B. Kreisgas verwendet werden (in der Figur nicht explizit dargestellt). Die Verbrennungszonen sind nicht-adiabat ausgeführt, was im vorliegenden Fall u.a. durch eine Wandkühlung (500) realisiert wird. Zwischen den Verbrennungszonen ist ferner ein Wärmetauscher zur Kühlung angeordnet (401). Im Anschluss an die letzte Verbrennungszone (302) erfolgt eine weitere Kühlung (402), bevor das Reaktionsgas (109) den erfindungsgemäßen Verbrennungsapparat verlässt.

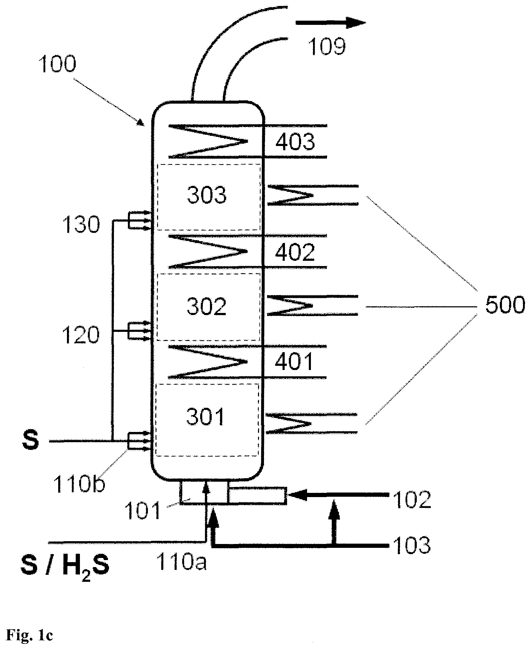

**Figur 1c** zeigt schematisch eine weitere bevorzugte Ausführungsform des erfindungsgemäßen Verbrennungsapparats 100. Über einen unteren Einlass (101) wird das $O_2$-haltige Verbrennungsgas (102) in den Verbrennungsapparat gefördert. Diesem Hauptgasstrom können nicht umgesetzte Bestandteile aus dem erfindungsgemäßen Verfahren oder aus dem erfindungsgemäßen Verfahren nachgeschalteten Prozessen beigegeben oder separat über den unteren Einlass (101) zugeführt werden (Kreisgas 103). Die Zuführung eines Teils der Schwefelverbindungen (S / $H_2S$, 110a) erfolgt dabei in der ersten Verbrennungszone (301) zentral in der Zuführung (101) des Verbrennungsgases oder seitlich (S, 110b) und in den weiteren Verbrennungszonen jeweils seitlich (S, 120, 130). Wie oben beschrieben können mehrere unterschiedliche Schwefelverbindungen (z.B. Schwefelverbindungen mit gebundenem Stickstoff, Schwefelverbindung ohne gebundenen Stickstoff, flüssiger Schwefel) zugeführt werden (in der Figur nicht explizit dargestellt) und zur Eindüsung von flüssigem Schwefelverbindungen und zur Düsenkühlung z.B. Kreisgas verwendet werden (in der Figur nicht explizit dargestellt). Die Verbrennungszonen sind nicht-adiabat ausgeführt, was im vorliegenden Fall u.a. durch eine Wandkühlung (500) realisiert wird. Zwischen den Verbrennungszonen sind ferner Wärmetauscher zur Kühlung angeordnet (401, 402). Im Anschluss an die letzte Verbrennungszone (303) erfolgt eine weitere Kühlung (403), bevor das Reaktionsgas (109) den erfindungsgemäßen Verbrennungsapparat verlässt.

**Figur 2** zeigt einen Querschnitt durch den in Figur 1a, Figur 1b und Figur 1c gezeigten Verbrennungsapparat 100 in Höhe der seitlichen Eindtisungsstellen (120) für die Schwefelverbindung S. Es sind vier Düsen vorhanden, die zu einer fächerförmigen Eindüsung der Schwefelverbindung führen. Die Wandkühlung 500 ist ebenfalls schematisch dargestellt.

**Figur 3** zeigt schematisch eine bevorzugte Ausführungsform einer Düse zur Zerstäubung von flüssigem Schwefel in die Brennkammer. Zur Zerstäubung wird im vorliegenden Beispiel Kreisgas (103a) verwendet (z. B. mit einem Überdruck von 1 bis 3 bar). Die Düse wird ferner von außen mit Kreisgas (103b) gekühlt (z.B. mit einem Überdruck von < 100 mbar).

**Figur 4a** zeigt schematisch eine bevorzugte Ausführungsform einer Düse zur Dosierung von Schwefelwasserstoff in die Brennkammer. In das Einleitrohr ist ein Drallkörper eingebracht, der zu einer Aufweitung des Gaseintrittskegels $\alpha$ führt.

**Figur 4b** zeigt schematisch eine bevorzugte Ausführungsform für den Einlass (101) für das Verbrennungsgas (102), durch den auch zentral ein schwefelhaltige Strom mit gebundenem Stickstoff (S / $H_2S$ / $NH_3$) zugegeben wird. Diese Ausführungsform ist analog zu einem Low-$NO_x$-Brenner ausgeführt, insofern die Zugabe des sauerstoffhaltigen Verbrennungsgases (102) und Kreisgases (103) am Brenner direkt gestuft erfolgt.

**Figur 5** zeigt das Temperaturprofil in der Verbrennungskammer in Strömungsrichtung entlang einer Linie $\ddot{L}$, die parallel zu einem Längsschnitt durch die Verbrennungskammer führt. Zunächst steigt die Temperatur $T$ in der ersten Verbrennungszone 301 bis auf einen Maximalwert $T_{301}^{max}$ an. Dieser Maximalwert wird durch Kühlung auf einen Wert von $\leq 2000°C$ gehalten. Der Verbrennungszone 301 ist eine intensive Zwischenkühlung 401 nachgeschaltet, die zu einer weiteren Temperatursenkung führt. Die Temperatur steigt dann in der zweiten Verbrennungszone 302 auf einen Maximalwert $T_{302}^{max}$ an, der kleiner ist als $T_{301}^{max}$. Auch der Verbrennungszone 302 ist eine intensive Kühlung (402) nachgeschaltet; die Temperatur sinkt. In der dritten Verbrennungszone 303 erreicht das Reaktionsgas schließlich eine Maximaltemperatur $T_{303}^{max}$, die kleiner ist als $T_{302}^{max}$. Bevor das Reaktionsgas den Verbrennungsapparat verlässt, wird es erneut gekühlt (403).

Es sei angemerkt, dass das Temperaturprofil über den Querschnitt des Verbrennungsapparats variiert; so liegen die Temperaturen nahe der Wandungen des Verbrennungsapparates aufgrund der Wandkühlung deutlich niedriger.

**Beispiel 1: Verbrennung von Schwefel mit Luft**

Im Folgenden wird als ein Ausführungsbeispiel des erfindungsgemäßen Verfahrens das Ergebnis einer numerischen Berechnung zur Verbrennung von Schwefel mit Luft beschrieben.

Als Edukte werden 10 t/h Schwefel und 79 t/h getrockneter Luft einem erfindungsgemäßen Verbrennungsapparat mit zwei Verbrennungszonen zugeführt (vergleiche Figur 1b), wobei für das Beispiel der Massenstrom an Luft am Eintritt des Verbrennungsapparates, und der Massenstrom Schwefel im Verhältnis 9,0:1,0 der ersten und zweiten Zone zugeführt wird.

Ein geringer Teil von der Verbrennungsluft (1,5 t/h) wird zur Eindüsung des Schwefels eingesetzt. Der Einsatz eines Kreisgases ist nicht erforderlich, aber prinzipiell möglich.

Am Ausgang des Verbrennungsapparats werden 89 t/h $SO_2$-haltigen Gasgemisches erhalten, das zu 22,5 Gew.-% $SO_2$, 9,5 Gew.-% $O_2$ und 68 Gew.-% $N_2$ und zusätzlich sonstigen Bestandteilen besteht.

Das erhaltene $SO_2$-haltige Gasgemisch wird auf 420°C abgekühlt und kann z.B. weiteren Verfahrensschritten zur Herstellung von Schwefelsäure zugeführt werden.

In der erfindungsgemäßen apparativen Ausgestaltung zeigt sich der entscheidende Vorteil gegenüber herkömmlichen Verörennungsapparaten zur Verbrennung von Schwefel mit Luft: Der erfindungsgemäße Verbrennungsapparat kommt ohne vorgelagerte Brennkammer aus, so dass die Investitionskosten (für die Brennkammer) sowie das Bauvolumen (Verweilzeit und Platzbedarf) deutlich geringer sind als bei herkömmlichen Ausführungen.

**Beispiel 2: Verbrennung von Schwefel mit Sauerstoff**

Im Folgenden wird als ein Ausführungsbeispiel des erfindungsgemäßen Verfahrens das Ergebnis einer numerischen Berechnung zur Verbrennung von Schwefel mit Sauerstoff beschrieben.

Als Edukte werden 10 t/h Schwefel und 15,2 t/h Sauerstoff mit einem Volumenanteil von 99,5% Sauerstoff und 0,5% Stickstoff einem erfindungsgemäßen Verbrennungsapparat mit drei Verbrennungszonen zugeführt, wobei für das Beispiel der Massenstrom Sauerstoff am Eintritt des Verbtennungsapparates, und der Massenstrom Schwefel im Verhältnis 5,7-3,8:0,5 der ersten, zweiten und dritten Zone zugeführt wird.

Zusätzlich werden dem Verbrennungsgas 10,2 t/h Kreisgas zugeführt, das aus 46 Gew.-% $O_2$, 15 Gew.-% $N_2$, 37 Gew.-% $SO_2$ sowie Anteilen von Ar, $CO_2$ und $SO_3$ und zusätzlich sonstigen Bestandteilen besteht. Weitere 1,5 t/h Kreisgas werden zur Verdüsung des Schwefels und weitere 1,2 t/h Kreisgas als Düsenkühlgas eingesetzt.

Am Ausgang des Verbrennungsapparats werden 38,1 t/h eines $SO_2$-haltigen Gasgemisches erhalten, das zu 64,9 Gew.-% $SO_2$, 29,2 Gew.-% $O_2$, 5,3 Gew.-% $N_2$ und zusätzlich sonstigen Bestandteilen besteht.

Das erhaltene $SO_2$-haltige Gasgemisch wird auf 430°C abgekühlt und weiteren Verfahrensschritten zur Herstellung von Schwefelsäure zugeführt, in dem das enthaltene $SO_2$ in einem ersten Schritt in einem Röhrenkontaktapparat (siehe z.B. WO2008/052649A1) zu 80% zu $SO_3$ umgesetzt wird, so dass am Ausgang des Röhrenkontaktapparates ein Gasgemisch bestehend aus 64,9 Gew.-% $SO_3$, 13,0 Gew.-% $SO_2$, 16,2 Gew.-% $O_2$ und zusätzlich sonstigen Bestandteilen 500°C vorliegt. Ein Teil dieses Gases (12,9 t/h) wird als Kreisgas zum Verbrennungsapparat zurück geführt.

## Beispiel 3: Verbrennung von schwefelwasserstoffhaltizen Gasen mit Luft

Im Folgenden wird als ein Ausführungsbeispiel des erfindungsgemäßen Verfahrens das Ergebnis einer numerischen Berechnung zur Verbrennung von 6,1 t/h Amin Acid Gas mit einer Zusammensetzung von 85 Mol-% $H_2S$, 7 Mol-% $H_2O$, 5 Mol-% $CO_2$ und 3 Mol-% $CH_4$, weiterhin 0,8 t/h Sour-Water-Stripping-Gas mit einer Zusammensetzung von 33 Mol-% $H_2S$, 33 Mol-% $H_2O$, 33 Mol-% $NH_3$ und 1 Mol-% $CH_4$ sowie 0,2 t/h flüssiger Schwefel in dem erfindungsgemäßen Verbrennungsapparat mit drei Verbrennungszonen beschrieben. Als Verbrennungsgas werden 52 t/h Verbrennungsluft mit einem Anteil an Sauerstoff von 21 Mol-% und einem Anteil an Stickstoff von 79 Mol-% eingesetzt.

Im Verbrennungsapparat findet eine vollständige Oxidation der Eduktgase statt, so dass am Ausgang der Brennkammer 59,1 t/h an $SO_2$-haltigem Gasgemisch (104) erhalten werden, welches zu 9,0 Mol-% $SO_2$, 11,4 Mol-% $H_2O$, 5,1 Mol-% $O_2$, 0,1 Mol-% $CO_2$ und 73,7 Mol-% $N_2$ besteht. Der erfindungsgemäße Verbrennungsapparat wird dabei so gestaltet und betrieben, dass die Konzentration von Stickoxiden gering ist (< 100 ppm). Dies wird durch die Aufteilung der Zuführung der Eduktgase erreicht: Das Sour-Water-Stripper-Gas wird zu 100% und das Amine Acid Gas wird zu 60% in der ersten Verbrennungszone zentral durch den inneren Einlass für die Verbrennungsluft geleitet. Das restliche Amine Acid Gas wird in die zweite Verbrennungszone eingebracht. Der Schwefel wird komplett in die dritte Verbrennungszone eingedüst. Die Verbrennungsluft wird am Einlass in die erste Verbrennungszone so aufgeteilt, dass in der Flamme reduzierende Bedingungen mit einer Luftzahl von 0,9 vorherrschen. Zur Verdüsung des Schwefels werden 40 kg/h und zur Düsenkühlung 600 kg/h der gesamten Verbrennungsluft eingesetzt.

Das $SO_2$-haltige Prozessgas verlässt den Verbrennungsapparat mit einer Temperatur von 300 bis 350°C und wird nachgeschalteten Prozessschritten (z.B. einem Absorptions-Regenerations-Verfahren zur Aufkonzentrierung von $SO_2$) zugeführt.

## Beispiel 4: Verbrennung von schwefelwasserstoffhaltigen Gasen mit Sauerstoff

Im Folgenden wird als ein Ausführungsbeispiel des erfindungsgemäßen Verfahrens das Ergebnis einer numerischen Berechnung zur Verbrennung von 6,1 t/h Amin-Acid-Gas mit einer Zusammensetzung von 85 Mol-% $H_2S$, 7 Mol-% $H_2O$, 5 Mol-% $CO_2$ und 3 Mol-% $CH_4$, 0,8 t/h Sour-Water-Stripping-Gas mit einer Zusammensetzung von 33 Mol-% $H_2S$, 33 Mol-% $H_2O$, 33 Mol-% $NH_3$ und 1 Mol-% $CH_4$, 0,2 t/h flüssiger, elementarer Schwefel und 12,2 t/h Verbrennungsgas mit einem Massenanteil von 99,5% Sauerstoff und 0,5% Stickstoff in einem Verbrennungsapparat mit drei Verbrennungszonen beschrieben.

Zusätzlich werden der Brennkammer 8,2 t/h zurückgeführtes Gas zugegeben, welches beispielsweise aus der ersten Absorptionsstufe einer Schwefelsäureanlage mit einem Röhrenkontaktapparat kommt und eine Zusammensetzung aus 36,6 Mol-% $O_2$, 35,0 Mol-% $CO_2$, 15,7 Mol-% $N_2$, 12,7 Mol-% $SO_2$, sowie Spuren von sonstigen Bestandteilen aufweist.

Im Verbrennungsapparat findet eine vollständige Oxidation der Eduktgase statt, so dass am Ausgang der Brennkammer 30,1 t/h $SO_2$-haltigen Gasgemisches erhalten werden, welches zu 29,3 Mol-% $SO_2$, 31,8 Mol-% $H_2O$, 22,6 Mol-% $O_2$, 11,2 Mol-% $CO_2$, 5,1 Mol-% $N_2$ und Spuren von sonstigen Bestandteilen besteht. Der erfindungsgemäße Verbrennungsapparat wird dabei so gestaltet und betrieben, dass die Konzentration von Stickoxiden gering ist (< 100 ppm). Dies wird durch die Aufteilung der Zuführung der Eduktgase erreicht: Das Sour Water Stripper Gas wird zu 100% und das Amine Acid Gas wird zu 50% in die erste Verbrennungszone zentral durch den unteren Einlass geleitet. Nahezu das komplette Kreisgas (Gesamtmenge abzüglich Verdüsungs- und Düsenkühlgas, siehe unten) wird um die schwefelhaltigen Gase herum in die erste Verbrennungszone eingebracht, wiederum umgebend wird das Verbrennungsgas am unteren Einlass zugegeben. Das restliche Amine Acid Gas wird in die zweite Verbrennungszone eingebracht. Der Schwefel wird komplett in die dritte Verbrennungszone eingedüst. Zur Eindüsung des Schwefels werden 40 kg/h Kreisgas und als Düsenkühlluft werden 600 kg/h Kreisgas eingesetzt.

Die abgeführte Wärme wird zur Erzeugung von Heißdampf und überhitztem Dampf zur Stromgewinnung über eine Turbine verwendet. Dabei wird eine Wärmemenge von ca. 25 WM frei, welche zu einer Erzeugung von ca. 30 t/h Hochdruckdampf (30 bar) verwendet wird.

Das $SO_2$-haltige Rauchgas verlässt den Verbrennungsapparat mit einer Temperatur von 300 bis 350°C und wird beispielsweise in einer nachgeschalteten Anlage zur Schwefelsäureherstellung weiter geleitet.

Bezugszeichen:

| | |
|---|---|
| 100 | Verbrennungsapparat |
| 101 | Einlass für Verbrennungsgas |
| 102 | Verbrennungsgas |
| 103 | zurückgeführtes Gas aus dem Prozess (Kreisgas) |
| 109 | Reaktionsgas |
| 110 | Eindtisungsstellen für Schwefelverbindung |
| 120 | Findüsungsstellen für Schwefelverbindung |
| 121 | eingedüste Schwefelverbindung |
| 130 | Eindüsungsstellen für Schwefelverbindung |
| 301 | Verbrennungszone |
| 302 | Verbrennungszone |
| 303 | Verbrennungszone |
| 401 | Zwischenkühlung |
| 402 | Zwischenkühlung |
| 403 | Warmeübertrager (Überhitzer) |
| 500 | Wandkühlung |

**Patentansprüche**

1. Verfahren zur Verbrennung einer oder mehrerer Schwefelverbindungen, vorzugsweise von Schwefel und/oder einem schwefelwasserstoffhaltigen Gas, wobei das Verbrennungsgas durch einen Verbrennungsapparat geleitet wird, der mindestens zwei in Strömungsrichtung des Verbrennungsgases aufeinander folgende Verbrennungszonen aufweist, wobei in jeder Verbrennungszone eine oder mehrere Schwefelverbindungen in das Verbrennungsgas eingedüst werden, wobei jede Verbrennungszone gekühlt wird und wobei jeder Verbrennungszone ein Wärmeübertrager nachgeschaltet ist, mit dem das Reaktionsgas gekühlt wird, so dass die Maximaltemperatur in jeder Verbrennungszone einen Wert von 2000°C nicht übersteigt, **dadurch gekennzeichnet, dass** die Düsen zur Eindüsung einer oder mehrerer Schwefelverbindungen in die Verbrennungszonen von außen mit einem Gas gekühlt werden, das eine Konzentration an Sauerstoff aufweist, die geringer ist als das in den Verbrennungsapparat eintretende Verbrennungsgas, vorzugsweise Kreisgas oder Luft, wobei das Gas in die Verbrennungszonen eintritt und zu einer Verminderung der Konzentration an Sauerstoff in unmittelbarer Nähe der Düsenspitzen führt.

2. Verfahren nach Anspruch 1, **dadurch gekennzeichnet, dass** dem Verbrennungsgas ein Kreisgas enthaltend Schwefeldioxid und Sauerstoff zugeführt wird.

3. Verfahren nach Anspruch 1 oder 2, **dadurch gekennzeichnet, dass** der Anteil von Sauerstoff im Verbrennungsgas, der dem Verbrennungsapparat zugeführt wird, mindestens 20%, bevorzugt mindestens 40%, besonders bevorzugt mindestens 70%, ganz besonders bevorzugt mindestens 90%, am meisten bevorzugt mindestens 95% beträgt.

4. Verfahren nach einem der vorangegangenen Ansprüche, **dadurch gekennzeichnet, dass** die Eindüsung einer oder mehrerer flüssiger Schwefelverbindungen mit einem Gas erfolgt, das einen geringeren Sauerstoffgehalt als das Verbrennungsgas aufweist, vorzugsweise mit Kreisgas oder Luft.

5. Verfahren nach einem der vorangegangenen Ansprüche, **dadurch gekennzeichnet, dass** die Maximaltemperatur in aufeinanderfolgenden Verbrennungszonen in Strömungsrichtung des Verbrennungsgases abnimmt.

6. Verfahren nach einem der vorangegangenen Ansprüche, **dadurch gekennzeichnet, dass** dem Reaktionsgas in der letzten Verbrennungszone eine Schwefelverbindung, vorzugsweise Schwefel zugesetzt wird, um vorhandenes $NO_x$ zu reduzieren.

**7.** Verfahren nach einem der vorangegangenen Ansprüche, **dadurch gekennzeichnet, dass** eine Schwefelverbindung mit gebundenem Stickstoff, ein schwefelwasserstoffhaltiges Gas und elementarer Schwefel nebeneinander verbrannt werden, wobei die stickstoffhaltige Schwefelverbindung und zumindest ein Teil des schwefelwasserstoffhaltigen Gases in die erste Verbrennungszone dosiert werden, während elementarer Schwefel in die letzte Verbrennungszone dosiert wird.

**8.** Verfahren nach einem der vorangegangenen Ansprüche, **dadurch gekennzeichnet, dass** neben einer oder mehreren Schwefelverbindungen ein schwefeldioxidhaltiges Gas, das oxidierbare Bestandteile enthält, dem Verbrennungsapparat zugeführt wird.

**9.** Verbrennungsapparat zur kontinuierlichen Verbrennung einer oder mehrerer Schwefelverbindungen, vorzugsweise von Schwefel und/oder einem schwefelwasserstoffhaltigen Gas, unter Bildung von Schwefeldioxid, mindestens umfassend einen Einlass für die Zuführung eines sauerstoffhaltigen Verbrennungsgases, einen Auslass für das produzierte Reaktionsgas, und mindestens zwei Verbrennungszonen zwischen dem Ein- und dem Auslass, wobei die Verbrennungszonen über Düsen für die Eindüsung einer oder mehrerer Schwefelverbindungen in die Verbrennungszonen verfügen, wobei die Verbrennungszonen gekühlt werden können und wobei jeder Verbrennungszone ein Wärmeüberträger zur Kühlung des Reaktionsgases nachgeschaltet ist, **dadurch gekennzeichnet, dass** die Düsen von außen mit einem Gas gekühlt werden können, das in die Verbrennungszonen eintritt und die Konzentration an Sauerstoff in unmittelbarer Nähe der Düsenspitzen gegenüber der Konzentration an Sauerstoff des in den Verbrennungsapparat eintretenden Verbrennungsgases reduzieren kann.

**10.** Verbrennungsapparat nach Anspruch 9, **dadurch gekennzeichnet, dass** der Verbrennungsapparat über Mittel zur Rückführung nicht umgesetzter Mengen an Schwefeldioxid und/oder Sauerstoff in das Verbrennungsgas verfügt.

## Claims

**1.** Method for the combustion of one or more sulfur compounds, preferably of sulfur and/or a sulfur-containing gas, wherein the combustion gas is routed through a combustion device having at least two combustion zones arranged sequentially in flow direction of the combustion gases, wherein in each of the combustion zones, one or more sulfur compounds are injected into the combustion gas, wherein each of the combustion zones is cooled and wherein a heat exchanger used for cooling the reaction gas is arranged downstream of each of the combustion zones, such that the maximum temperature in each of the combustion zones does not exceed a value of 2000°C,
**characterized in that** the nozzles for injecting of one or more sulfur compounds into the combustion zones are cooled from the exterior with a gas having an oxygen concentration of less than the combustion gas entering the combustion device, preferably circulating gas or air, wherein the gas enters the combustion zones and effects a reduction of the oxygen concentration in direct proximity of the nozzle tips.

**2.** Method according to claim 1,
**characterized in that** a circulating gas containing sulfur dioxide and oxygen is fed to the combustion gas.

**3.** Method according to claim 1 or 2,
**characterized in that** the oxygen content in the combustion gas which is fed to the combustion device is at least 20%, preferably at least 40%, more preferably at least 70%, even more preferably at least 90%, and most preferably at least 95%.

**4.** Method according to any of the preceding claims,
**characterized in that** the injection of one or more liquid sulfur compounds takes place with a gas that has a lower oxygen content than the combustion gas, preferably with circulating gas or air.

**5.** Method according to any of the preceding claims,
**characterized in that** the maximum temperature in consecutive combustion zones decreases in flow direction of the combustion gases.

**6.** Method according to any of the preceding claims,

**characterized in that** a sulfur compound, preferably sulfur, is added to the reaction gas in the last combustion zone, in order to reduce any present $NO_x$.

7. Method according to any of the preceding claims,
**characterized in that** a sulfur compound with bound nitrogen, a hydrogen sulfide-containing gas and elemental sulfur are combusted in parallel, wherein the nitrogen-containing sulfur compound and at least a portion of the hydrogen sulfide-containing gases are dosed into the first combustion zone, while elemental sulfur is dosed into the last combustion zone.

8. Method according to any of the preceding claims,
**characterized in that**, in addition to one or more sulfur compounds, a sulfur dioxide-containing gas including oxidizable components is fed to the combustion device.

9. Combustion device for the continuous combustion of one or more sulfur compounds, preferably of sulfur and/or a hydrogen sulfide-containing gas, with the formation of sulfur dioxide, at least comprising an inlet for feeding of an oxygen-containing combustion gas, an outlet for the generated reaction gas, and at least two combustion zones between the inlet and the outlet, wherein the combustion zones are provided with nozzles for the injection of one or more sulfur compounds into the combustion zones, wherein the combustion zones are adapted to be cooled and wherein a heat exchanger for cooling the reaction gases is arranged downstream of each of the combustion zones,
**characterized in that** the nozzles are configured to be cooled from the exterior with a gas, which enters the combustion zones and which is able to reduce the oxygen concentration in direct proximity of the nozzle tips relative to the oxygen concentration of the combustion gases entering the combustion device.

10. Combustion device according to claim 9,
**characterized in that** the combustion device comprises means for returning unconverted amounts of sulfur dioxide and/or oxygen to the combustion gas.

## Revendications

1. Procédé de combustion d'un ou plusieurs composés soufrés, de préférence de soufre et/ou d'un gaz contenant du sulfure d'hydrogène, le gaz de combustion étant conduit à travers un appareil de combustion qui présente au moins deux zones de combustion successives dans la direction d'écoulement du gaz de combustion, un ou plusieurs composés soufrés étant injectés dans le gaz de combustion dans chaque zone de combustion, chaque zone de combustion étant refroidie et chaque zone de combustion étant suivie d'un échangeur de chaleur avec lequel le gaz de réaction est refroidi, de sorte que la température maximale dans chaque zone de combustion ne dépasse pas une valeur de 2 000 °C, **caractérisé en ce que** les buses pour l'injection d'un ou plusieurs composés soufrés dans les zones de combustion sont refroidies par l'extérieur avec un gaz qui présente une concentration en oxygène qui est plus faible que celle du gaz de combustion entrant dans l'appareil de combustion, de préférence du gaz de recyclage ou de l'air, le gaz entrant dans les zones de combustion et conduisant à une diminution de la concentration en oxygène à proximité immédiate des têtes de buse.

2. Procédé selon la revendication 1, **caractérisé en ce qu'**un gaz de recyclage contenant du dioxyde de soufre et de l'oxygène est amené au gaz de combustion.

3. Procédé selon la revendication 1 ou la revendication 2, **caractérisé en ce que** la proportion d'oxygène dans le gaz de combustion qui est amené à l'appareil de combustion est d'au moins 20 %, de préférence d'au moins 40 %, particulièrement de préférence d'au moins 70 %, tout particulièrement de préférence d'au moins 90 %, le plus préférentiellement d'au moins 95 %.

4. Procédé selon l'une des revendications précédentes, **caractérisé en ce que** l'injection d'un ou plusieurs composés soufrés liquides s'effectue avec un gaz qui présente une teneur en oxygène plus faible que le gaz de combustion, de préférence avec du gaz de recyclage ou de l'air.

5. Procédé selon l'une des revendications précédentes, **caractérisé en ce que** die température maximale diminue dans les zones de combustion successives dans la direction d'écoulement du gaz de combustion.

6. Procédé selon l'une des revendications précédentes, **caractérisé en ce qu'**un composé soufré, de préférence du

EP 2 507 167 B1

soufre, est ajouté au gaz de réaction dans la dernière zone de combustion pour réduire le NOx présent.

**7.** Procédé selon l'une des revendications précédentes, **caractérisé en ce qu'**un composé soufré avec de l'azote lié, un gaz contenant du sulfure d'hydrogène et du soufre élémentaire sont brûlés côte à côte, le composé soufré contenant de l'azote et au moins une partie du gaz contenant du sulfure d'hydrogène étant dosés dans la première zone de combustion tandis que le soufre élémentaire est dosé dans la dernière zone de combustion.

**8.** Procédé selon l'une des revendications précédentes, **caractérisé en ce qu'**en plus d'un ou plusieurs composés soufrés, un gaz contenant du dioxyde de soufre, qui contient des composants oxydables, est amené à l'appareil de combustion.

**9.** Appareil de combustion pour la combustion continue d'un ou plusieurs composés soufrés, de préférence de soufre et/ou d'un gaz contenant du sulfure d'hydrogène, avec formation de dioxyde de soufre, comprenant au moins une entrée pour l'amenée d'un gaz de combustion contenant de l'oxygène, une sortie pour le gaz de réaction produit et au moins deux zones de combustion entre l'entrée et la sortie, les zones de combustion disposant de buses pour l'injection d'un ou plusieurs composés soufrés dans les zones de combustion, les zones de combustion pouvant être refroidies et chaque zone de combustion étant suivie d'un échangeur de chaleur pour refroidir le gaz de réaction, **caractérisé en ce que** les buses peuvent être refroidies par l'extérieur avec un gaz qui entre dans les zones de combustion et peut réduire la concentration en oxygène à proximité immédiate des têtes de buse par rapport à la concentration en oxygène du gaz de combustion entrant dans l'appareil de combustion.

**10.** Appareil de combustion selon la revendication 9, **caractérisé en ce que** l'appareil de combustion dispose de moyens pour recycler les quantités de dioxyde de soufre et/ou d'oxygène non transformées dans le gaz de combustion.

Figuren

Fig. 1a

Fig. 1b

**Fig. 1c**

120

500

121

100

Fig. 2

103a    103b

S

Fig. 3

Fig. 4a

Fig. 4b

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2007090671 A2
- DE 1948754 A1
- WO 200709067 A2
- WO 199532149 A1
- EP 1295849 B1
- DE 4002465 A1
- WO 2008052649 A1
- EP 1262451 A2
- DE 10351808 A1
- US 3803297 A
- US 3803298 A
- US 5807530 A
- EP 1526129 A1
- EP 1295849 A2

**In der Beschreibung aufgeführte Nicht-Patentliteratur**

- Ullmann's Encyclopedia of Industrial Chemistry. 1994, vol. A25, 574 f
- *Sulphur,* September 2007, vol. 312, 80-85
- **A. J. KIDNAY ; WILLIAM R. PARRISH.** Fundamentals of Natural Gas Processing. CRC Press, 2006
- **KOHL, RICHARD NIELSEN.** Gas Purification. Gulf Publishing Company, 1997
- **PRABIR BASU et al.** Boilers and Burner: Design and Theory, Mechanical Engineers Series. Springer-Verlag, 2000